# EUROPÄISCHE PATENTSCHRIFT

(11) **EP 0 672 687 B1**
(45) Veröffentlichungstag und Bekanntmachung des Hinweises auf die Patenterteilung: **19.03.1997**
(21) Anmeldenummer: 95100677.4
(22) Anmeldetag: 19.01.1995
(51) Int. Cl.: C08B 37/16

(54) **Verfahren zur Herstellung von aminofunktionellen Cyclodextrin-Derivaten**
Process for producing amino-functional cyclodextrin derivatives
Procédé de préparation de dérivés aminofonctionnels de la cyclodextrine

(30) Priorität: 20.01.1994 DE 4401618
(43) Veröffentlichungstag der Anmeldung: 20.09.1995
(73) Patentinhaber: Consortium für elektrochemische Industrie GmbH, D-81379 München (DE)
(72) Erfinder: Hirsenkorn, Rolf, Dr., D-81477 München (DE)
(74) Vertreter: Potten, Holger

(56) Entgegenhaltungen:
- DE-A- 4 136 325
- JP-A- 4 100 801
- US-A- 3 553 191

## Beschreibung

Die Erfindung betrifft Verfahren zur Herstellung von aminofunktionellen Cyclodextrin Derivaten mit über einen Spacer an das Cyclodextrin (CD) angeknüpfter Aminofunktion.

Folgende Verfahren zur Herstellung von Cyclodextrin Derivaten, bei denen die Aminofunktion über einen Spacer an das Cyclodextrin angeknüpft ist, sind literaturbekannt:

Aus CA 117:92570 (entspricht JP 04100801) ist bekannt, 2-Dialkylaminoethyl-substituierte CD's durch Alkylierung von CD mit Dialkylaminoethylchlorid herzustellen. Durch dieses Verfahren sind nur tertiäre Amine zugänglich, weil ansonsten das Problem der Bildung von Polyethyleniminketten auftritt. Zudem wird bei diesem Verfahren als Abfallprodukt in stöchiometrischen Mengen das entsprechende Salz gebildet, was wiederum eine aufwendige Abtrennung der substituierten CD's notwendig macht.

Aus US-A-3.553.191 ist die Umsetzung von CD mit Ethylenimin in Gegenwart von Essigsäure zu 2-Aminoethyl substituierten CD's bekannt. Auch bei diesem Verfahren stellt sich das Problem der Bildung von Polyethyleniminketten. Ein weiterer Nachteil dieses Verfahrens liegt in der Verwendung des bekanntermaßen sehr toxischen und krebserregenden Ethylenimins.

Aus DE-A-41 36 325 sind eine Reihe von aminofunktionellen CD Derivaten bekannt. Zu ihrer Herstellung wird auf eine Reihe von Literaturstellen verwiesen.

Aufgabe der Erfindung war es, ein wirtschaftliches Verfahren bereitzustellen, welches die Herstellung von Cyclodextrin Derivaten mit mindestens einer über einen Spacer an das CD angeknüpften Aminofunktion ermöglicht.

Die Aufgabe wird gelöst durch ein Verfahren, bei dem α-, β- γ-Cyclodextrin oder deren teilsubstituierte Derivate einzeln oder in beliebiger Mischung mit mindestens einem cyclischen Carbamidsäureester umgesetzt werden.

Vorzugsweise erfolgt die Umsetzung in Gegenwart eines Katalysators.

Das erfindungsgemäße Verfahren wird vorzugsweise bei leichtem Vakuum, worunter ein Druck von etwa 100 mm Hg zu verstehen ist, bis Eigendruck, wie er bei Verwendung einer geschlossenen Apparatur entsteht, durchgeführt. Besonders bevorzugt wird das erfindungsgemäße Verfahren bei leichtem Vakuum durchgeführt. Es erleichtert die Entfernung des bei der Reaktion entstehenden Kohlendioxids und entfernt ggf. vorhandendes Wasser aus technischem CD.

Das erfindungsgemäße Verfahren ist mit einer Vielzahl von Cyclodextrinen, Cyclodextrinderivaten und cyclischen Carbamidsäureestern durchfuhrbar und somit sehr flexibel.

Im erfindungsgemäßen Verfahren sind α-, β- und/oder γ-Cyclodextrin, wie sie käuflich erhältlich sind, einsetzbar. Die Cyclodextrine können jedoch ebenso in an sich bekannter Weise, beispielsweise durch enzymatische Umsetzung von Stärke mit Cyclodextrin Glycosyltransferase (CGTase E.C.2.4.1.19), hergestellt werden. Ebenso sind teilsubstituierte Cyclodextrinderivate wie z.B. CD-Ether und -Ester mit mindestens einer freien Hydroxylgruppe einsetzbar. Beispiele für solche Derivate sind teilsubstituierte Hydroxy- alkylcyclodextrine, teilsubstituierte Alkylcyclodextrine, teilsubstituierte Alkenyl-Cyclodextrine, partiell glycosilierte Cyclodextrine, teilsubstituierte Acyl-Cyclodextrine oder teilsubstituierte Acetyl-Cyclodextrine.

Bevorzugt werden im erfindungsgemäßen Verfahren α-, β- und/oder γ-Cyclodextrin, teilsubstituierte Hydroxyalkylcyclodextrine wie z.B. Hydroxypropyl-Cyclodextrine, teilsubstituierte Alkylcyclodextrine wie z.B. Methyl-Cyclodextrine, und/oder teilsubstituierte Alkenyl-Cyclodextrine eingesetzt.

Die Cyclodextrine können in handelsüblicher Qualität mit einem Wassergehalt vorzugsweise zwischen 0 und 15 Gew.% eingesetzt werden. Sie müssen keinen besonderen Anforderungen bezüglich Reinheit genügen. Aus Kostengründen besonders bevorzugt werden Cyclodextrine oder Cyclodextrinderivate mit einem Wassergehalt von in der Regel 10 bis 15 Gew.% eingesetzt, wie sie handelsüblich erhältlich sind.

Als cyclische Carbamidsäureester werden vorzugsweise 2-Oxazolidinon, 3-Methyl-2-oxazolidinon, 3-Ethyl-2-oxazolidinon, 3-Propyl-2-oxazolidinon, 3-Butyl-2-oxazolidinon, 3-(2-Hydroxyethyl)-2-oxazolidinon, 3-(2-Hydroxypropyl)-2-oxazolidinon, 3-Phenyl-2-oxazolidinon, 3-Acetyl-2-oxazolidinon, 3-Propionyl-2-oxazolidinon, 4-Ethyl-2-oxazolidinon, 4-Isopropyl-2-oxazolidinon, 4-tert.-Butyl-2-oxazolidinon, 4-Benzyl-2-oxazolidinon, 3-Propyl-2-oxazolidinon, 3-Butyl-2-oxazolidinon, 3-(2-Hydroxypropyl)-5-methyl-2-oxazolidinon, 3-(2-Hydroxypropyl)-5-methyl-2-oxazolidinon, 4-Methyl-5-propyl-2-oxazolidinon, 4-Methyl-5-phenyl-2-oxazolidinon, 1-Oxa-2-azaspiro-[4,5]-decan-2-on, 2-Oxazinon, 2-Oxazepinon oder Mischungen der genannten Substanzen eingesetzt. 2-Oxazinon läßt sich wie bei B.L. Philips, P.A. Argabright, J. Heterocycl. Chem. 3, 84 (1968) beschrieben herstellen, die übrigen Substanzen sind käuflich erhältlich.

Besonders bevorzugt werden 2-Oxazolidinon, 3-Methyl-2-oxazolidinon, 2- Oxazinon oder 2-Oxazepinon eingesetzt.

Die cyclischen Carbamidsäureester werden in handelsüblicher Reinheit und Wasserfreiheit eingesetzt.

Die Reaktion verläuft in Lösung oder in Suspension, vorzugsweise in Lösung. Die Reaktionsmischung ist vorzugsweise bis auf den in den Ausgangssubstanzen handelsüblicher Reinheit vorhandenen Wassergehalt wasserfrei. Es wird vorzugsweise in Substanz gearbeitet. Der Carbamidsäureester wird vorzugsweise im Überschuß eingesetzt. Wenn flüchtige Carbamidsäureester, worunter insbesondere Carbamidsäureester mit einem Siedepunkt (0,01 mm Hg) kleiner 180°C zu verstehen sind, verwendet werden, kann ein Überschuß an diesen nach beendeter Umsetzung durch destillative Abtrennung zu mehr als 90 % zurückgewonnen werden.

Eine Verdünnung der Reaktionsmischung mit inerten Lösungsmitteln ist möglich. Als inerte Lösungsmittel können spielsweise Dimethylformamid, N-Methylpyrrolidon, Dimethylsulfoxid, Dimethylacetamid, Methylformamid, Formamid, hydrofuran, Dioxan, Aceton, Ethylacetat, Pyridin, Dichlormethan, oder deren Mischungen eingesetzt werden. Vorzugsweise wird Dimethylformamid verwendet. Die Lösungsmittel sollten bevorzugt in wasserfreier Form eingesetzt werden.

Die Reaktion wird vorzugsweise in Gegenwart eines Katalysators durchgeführt. Als Katalysator wird vorzugsweise mindestens eine Base und/oder mindestens ein basischer Ionenaustauscher eingesetzt. Der Katalysator wird vorzugsweise in weitgehend wasserfreier Form eingesetzt.

Als Basen werden vorzugsweise Natriumhydroxid, Kaliumhydroxid, Calciumhydroxid, Calciumoxid, Natriumcarbonat oder Kaliumcarbonat oder deren Mischungen eingesetzt. Besonders bevorzugt werden Natriumhydroxid, Kaliumhydroxid, Natriumcarbonat und/oder Kaliumcarbonat eingesetzt.

Als basische Ionenaustauscher werden vorzugsweise macroreticulare stark basische Ionenaustauscher eingesetzt. Geeignet sind beispielsweise macroreticulare stark basische Ionenaustauscher aufgebaut aus Styrol-Divinylbenzol-Copolymer mit NR₃⁺Cl⁻Gruppen wie z.B. Amberlite^{R} IRA-910 (Fa. Rohm & Haas) oder macroreticulare stark basische Ionenaustauscher mit NMe₃⁺Cl⁻Gruppen wie z.B. Amberlyst^{R} A26 (Fa. Rohm & Haas).

Im erfindungsgemäßen Verfahren werden mindestens ein Cyclodextrin oder Cyclodextrinderivat, mindestens ein Carbamidsäureester und mindestens ein Katalysator in beliebiger henfolge miteinander vermischt. Cyclodextrin und Carbamidsäureester werden im Molverhältnis 1:0,2 bis 1:20, vorzugsweise 1:5 bis 1:10, eingesetzt, Cyclodextrin und wasserfreier Katalysator werden im Molverhältnis 1:0,01 bis 1:10, vorzugsweise 1:0,1 bis 1:1 eingesetzt.

Ein Überschuß an Carbamidsäureester im Reaktionsansatz des erfindungsgemäßen Verfahrens ist günstig. Im Falle leicht rückgewinnbarer Carbamidsäureester, worunter insbesondere Carbamidsäureester mit einem Siedepunkt unter 150°C bei 0,01 mm Hg zu verstehen sind, werden diese vorzugsweise auch als Reaktionsmedium eingesetzt.

Größere Mengen an Katalysator von vorzugsweise 0,5 bis 8 Mol Katalysator pro Mol CD fördern die Umsatzgeschwindigkeit der Reaktion. Es ist für eine Erhöhung des Umsatzes zudem günstig, aber nicht unbedingt notwendig, den Katalysator portionsweise d.h. in mindestens zwei Portionen bevorzugt in 4 bis 8 Portionen zuzugeben.

Die Reaktion läuft bei Temperaturen von 60°C bis 170°C, bevorzugt bei 100 bis 150°C, über einen Zeitraum von 2 bis 10 Stunden. Üblicherweise liegt die Reaktionszeit bei etwa 6 bis 8 Stunden.

Wenn der eingesetzte Carbamidsäureester im Hochvakuum (0,01 mm Hg) bei Temperaturen bis zu etwa 180°C flüchtig ist, wird er nach Beendigung der Reaktion bei geeignetem Vakuum abdestilliert.

Das Reaktionsgemisch wird in einem Lösungsmittel, vorzugsweise Wasser, aufgenommen. Mit einer milden Säure wird der gewünschte pH Wert (pH 7 bis 10) eingestellt. Als milde Säure wird vorzugsweise Essigsäure, Phosphorsäure, Salzsäure oder ein saurer Ionenaustauscher, vorzugsweise ein stark saurer macroreticulärer Kationenaustauscher in Na⁺-Form wie z.B. das Styrol-Divinylbenzol-Copolymer Amberlite 200 oder ein schwach saurer macroreticulärer Kationenaustauscher in H⁺-Form wie z.B. Amberlite IRC-50 (beide Fa. Rohm und Haas) eingesetzt.

Eine Aufreinigung der erfindungsgemäßen Cyclodextrinderivate kann, wie aus dem Stand der Technik bekannt, erfolgen. Beispielsweise wird die konzentrierte wässrige Lösung in etwa die zehnfache Menge bezogen auf das Volumen der Wasserphase eines organischen Lösungsmittels getropft. Das ausgefällte Produkt wird abfiltriert oder zentrifugiert (beispielsweise 10 min bei 10 g) und anschließend getrocknet. Der getrocknete Niederschlag wird gelöst. Als Lösungsmittel läßt sich z.B. Wasser verwenden.

Die Aufreinigung der Produkte kann ebenso nach anderen, für die Aufreinigung von Cyclodextrin oder Cyclodextrinderivaten bekannten Methoden erfolgen. Beispiele für solche Methoden sind direkte Kristallisation, Aktivkohle-Adsorption, austauscherchromatographie, Gelpermeationschromatographie, Dialyseverfahren oder enzymatische Abbauverfahren.

Eine weitere Aufreinigung der erfindungsgemäß erhaltenen Cyclodextrinderivate kann, wie ebenfalls aus dem Stand der Technik bekannt, beispielsweise durch Säulenchromatographie oder präparative HPLC oder Dialyse (z.B. Dialyseschläuche benzoylierte Cellulose, Fa. Sigma, D-8024 Deisenhofen) erfolgen.

Cyclodextrinderivate ohne über einen Spacer angeknüpfte Aminofunktion, wie sie bei sehr niedrigem Substitutionsgrad noch im Reaktionsgemisch vorhanden sein können, lassen sich beispielsweise durch Ionenaustauschchromatographie an sauren Ionenaustauschern wie z.B. einem stark sauren gelförmigen Kationenaustauscher mit vernetzter Polystyrol Matrix und Sulfonsäuregruppen, wie er unter dem Namen Levatit S 100 bei der Fa. Bayer AG, Leverkusen erhältlich ist, abtrennen.

Dazu werden zunächst von der mit den Reaktionsprodukten beladenen Säule die nicht aminosubstituierten CD's mittels eines geeigneten Elutionsmittels (z.B. Wasser) eluiert und anschließend die aminosubstituierten CD Derivate mittels eines geeigneten Elutionsmittels wie z.B. einer Salzlösung (z.B. 1 M NaCl) oder einer Säure (z.B. 1 M HCl) eluiert. Durch dieses Verfahren lassen sich aminosubstituierte CD's sehr einfach reinigen.

In einer möglichen Ausführungsform des erfindungsgemäßen Verfahrens erfolgt, ausgehend von nativen CD's eine Hydroxyalkylierung und Aminofunktionalisierung in einem Ansatz.

Dazu wird, wie aus dem Stand der Technik bekannt, CD mit Alkylenoxid und Kaliumcarbonat (siehe beispielsweise DE 3712246) oder Alkylenoxid und wässrige NaOH (siehe beispielsweise WO 90/12035) umgesetzt. Die Mengenverhältnisse werden entsprechend dem angestrebten Substitutionsgrad, wie in den genannten Literaturstellen beschrieben, gewählt. Nach Beendigung der Hydroxyalkylierung wird zunächst Carbamidsäureester zugegeben. Das überschüssige Alkylenoxid sowie ggf. vorhandenes Wasser werden unter langsamer Erwärmung abdestilliert. Die Destillation erfolgt vorzugsweise bei etwa 80 bis 100°C ggf. im Teilvakuum. Anschließend erfolgt die Umsetzung mit dem Carbamidsäureester bei einer Temperatur von 100 bis etwa 150°C im Teilvakuum (etwa 200 mm Hg), wobei noch vorhandenes Kaliumcarbonat bzw. noch vorhandenes NaOH als Katalysator fungiert.

Das erfindungsgemäße Verfahren bietet somit eine Reihe von Vorteilen über die aus dem Stand der Technik bekannten Verfahren. Das erfindungsgemäße Verfahren ist zudem umweltfreundlich, da nicht umgesetzte Ausgangssubstanzen zurückgewonnen und wieder in das Verfahren eingeführt werden können. Das erfindungsgemäße Verfahren hat des weiteren nur eine minimale Salzfracht und es vermeidet den Umgang mit krebserregenden Stoffen.

Nach dem erfindungsgemäßen Verfahren werden Cyclodextrin Derivate der folgenden Formel I erhalten:

CD-[O-(CR¹R²)ₙ-(CR³R⁴)ₘ-NHR⁵]ₖ (I),

wobei CD alpha-, beta-, gamma-Cyclodextrin, bzw. alpha-, beta-, gamma-Cyclodextrin Derivate, mit mindestens einer freien OH-Gruppe bedeutet,
R¹, R², R³, R⁴ entweder gleich oder verschieden sind und Wasserstoff oder C1 bis C4 Alkyl-, oder Aryl-, oder hydroxy-, alkoxy-, halogen- und/oder alkylamin- substituiertes Aryl-, oder bei Verknüpfung von zwei der Reste R¹ bis R⁴ Cycloalkyl-, oder hydroxy-, alkoxy-, halogen- und/oder alkylamin- substituiertes Cycloalkyl-, bedeutet,
R⁵ die gleiche Bedeutung hat wie für R¹ bis R⁴ genannt oder Carboxyl- bedeutet,
n und m entweder gleich oder verschieden sind und 1, 2 oder 3 bedeuten
und für den Fall das CD α-Cyclodextrin ist, k eine ganze Zahl von 1 bis 18 bedeutet,
bzw. für den Fall das CD β-Cyclodextrin ist, k eine ganze Zahl von 1 bis 21 bedeutet,
bzw. für den Fall das CD γ-Cyclodextrin ist, k eine ganze Zahl von 1 bis 24 bedeutet,
bzw. für den Fall das CD eines der genannten CD Derivate ist, k eine ganze Zahl von 1 bis zur Zahl der freien OH-Gruppen am CD Derivat bedeutet.

Bei den nach dem erfindungsgemäßen Verfahren erhaltenen Produkten ist die Aminofunktion immer über einen Spacer an das CD angeknüpft. Unter einem Spacer ist im Sinne der Erfindung ein gegebenenfalls substituierter Kohlenwasserstoffrest mit 2 bis 6 C Atomen wie er in Formel I CD und Aminofunktion verbindet zu verstehen.

Die nach dem erfindungsgemäßen Verfahren erhaltenen CD Derivate weichen in ihrer Produktverteilung von der statistischen Produktverteilung, wie sie nach bekannten Verfahren erhalten wird, ab. Nach dem erfindungsgemäßen Verfahren werden mit hoher Selektivität Cyclodextrin Derivate mit exakt einem Aminosubstituenten pro CD erhalten. Die prozentuale Häufigkeit für das monosubstituierte Produkt bezogen auf die Häufigkeit aller aminosubstituierten CD Derivate liegt in der Regel bei über 80%. der in Formel I genannten Aminosubstituenten einen durchschnittlichen MS von 0,01 - 0,2 und einen Anteil an mono-

Die nach dem erfindungsgemäßen Verfahren erhaltenen CD Derivate haben den Vorteil, daß bei ihrer Fixierung an einen Träger keine sterische Hinderung auftritt. Zudem wird eine gute Komplexierfähigkeit auch der an einen Träger geknüpften Derivate gefunden.

Geeignete Träger sind vorzugsweise Polymere mit sauren oder reaktiven Gruppen. Beispiele für solche Träger sind saure Ionenaustauscher oder oxirangruppenhaltige Polymere.

Die nach dem erfindungsgemäßen Verfahren erhaltenen Cyclodextrin Derivate lassen sich aufgrund ihres basischen Charakters zur Bindung an saure Oberflächen verwenden. Unter saurer Oberfläche sind insbesondere Oberflächen mit Carboxyl-oder -SO₃H-Gruppen wie beispielsweise Levatit S 100 zu verstehen.

Aufgrund ihres nukleophilen Charakters lassen sich die Derivate auch zur kovalenten Bindung an reaktionsfähige Träger worunter insbesondere Träger mit funktionellen Gruppen wie z.B. Halogen-, Epoxid-, Aldehydrest, oder aktivierte Carbonsäurederivate (-Ester, -halogenide,-imidazolid) zu verstehen sind, verwenden. Sie lassen sich beispielsweise auf Eupergit immobilisieren (Verfahren dazu beschrieben bei K. Laumen, E.H. Reimerdes, M. Schneider, Tetrahedron Letters 26 (4), 407-410 (1985)).

Bei der kovalenten oder ionischen Anknüpfung über die Aminfunktion an obengenannte Träger wird das CD nur über einen Arm angeknüpft, die CD-Kavität ist in der Folge besser für Komplexierungen zugänglich als dies bei einer 2 oder 3-fachen Anknüpfung über mehrere Arme möglich wäre. Zudem werden bei der Anknüpfung an die genannten Träger Vernetzungsreaktionen vermieden.

Mit den aminofunktionellen CD Derivaten können also Oberflächen modifiziert werden. Die so an Träger fixierten CD Derivate lassen sich dann ebenfalls für alle Anwendungen, wie sie für Cyclodextrine und deren Derivate bekannt sind, verwenden.

Beispiele für solche Anwendungen sind Geruchsadsorption, Beduftung, Stabilisierung, Komplexierung/Formulierung von Wirkstoffen, Komplexierung störender Komponenten.

Die folgenden Beispiele dienen der weiteren Erläuterung der Erfindung. Der Reaktionsverlauf der in den Beispielen beschriebenen Umsetzungen wurde mittels Dünnschichtchromatographie kontrolliert.

### Beispiel 1

### Herstellung von 2-Methylaminoethyl (MS 0,12)-β-cyclodextrin

- Ansatz:: 10 g (7,6 mmol) β-Cyclodextrin (Wassergehalt 13%)
2,4 g (4,2 mmol) Kaliumcarbonat
56 g (560 mmol) 3-Methyl-2-oxazolidinon

### Apparatur: Reaktionskolben mit Destillationsaufsatz

Durchführung: Das β-CD und 25% der o. g. Kaliumcarbonatmenge wurden mit 3-Methyl-2-oxazolidinon vermischt und auf 125°C erwärmt. Mit Ausnahme des Kaliumcarbonats war alles vollständig gelöst. Die Restmengen Kaliumcarbonat wurden im 2h-Rhythmus in 25%-Portionen zugegeben. Nach insgesamt 8h bei 125°C (leichtes Vakuum: ca. 200 mm Hg) wurde nicht umgesetztes 3-Methyl-2-oxazolidinon im Hochvakuum (ca. 0,1 mm Hg) abdestilliert (Rückgewinnung 50 g = 90%). Der Rückstand wurde in wenig Wasser (ca. 20 ml) gelöst und in Aceton (ca. 200 ml) eingetropft. Der Niederschlag wurde abzentrifugiert und getrocknet. Der MS Wert wurde NMR-spektroskopisch bestimmt (1H-NMR in Dimethylsulfoxid (DMSO)/5 Vol.% Trifluoressigsäure). Ausbeute 9,8 g an 2-Methylaminoethyl (MS 0,12)-β-cyclodextrin.

Das so erhaltene Produkt wurde mittels f.a.b.-Massenspektroskopie charakterisiert. Die prozentuale Häufigkeitsverteilung der Molekulargewichte ist in Tab. 1 wiedergegeben. Im Vergleich dazu ist die prozentuale Molekulargewichtsverteilung, wie sie sich für eine statistische Verteilung bei einem MS von 0,12 errechnet, wiedergegeben.

**Tab.1:**

| Zahl der Substituenten | % Bsp. 1 | % errechnet |
|---|---|---|
| 0 | 41% | 42% |
| 1 | 51% | 37% |
| 2 | 6% | 15% |
| 3 | 2% | 4% |
| 4 | 0% | 1% |
| Selektivität für Monosubstitution | 86% | 65% |

### Beispiel 2

### Herstellung von 2-Methylaminoethyl (0,1)-hydroxypropyl (0,7)-β-cyclodextrin

- Ansatz:: 54,6 g (38,5 mmol) Hydroxypropyl β-CD (0.7)
2,9 g (21 mmol) Kaliumcarbonat
280 g (2.77 mol) 3-Methyl-2-oxazolidinon

### Apparatur: Reaktionskolben mit Destillationsaufsatz

Durchführung: Das Hydroxypropyl β-CD MS: (0,7) (hergestellt wie beschrieben in WO 90/12035 Bsp.1 und 25% der Kaliumcarbonatmenge wurden in 25% der 3-Methyl-2-oxazolidinon-Menge vermischt und auf 125°C erwärmt. Mit Ausnahme des Kaliumcarbonats war alles vollständig gelöst. Die Restmengen Kaliumcarbonat und 3-Methyl-2-oxazolidinon wurden im 2h-Rhythmus in 25%-Portionen zugegeben. Nach insgesamt 8h bei 125°C wurde nicht umgesetztes 3-Methyl-2-oxazolidinon im Hochvakuum abdestilliert (Rückgewinnung 250g = 89%). Der Rückstand wurde in wenig Wasser (ca. 60 ml) gelöst und in Aceton (ca. 600 ml) eingetropft. Der Niederschlag wurde abzentrifugiert und getrocknet. Ausbeute 55,2 g an 2-Methylaminoethyl (0,1)-hydroxypropyl (0,7)-β-cyclodextrin.

### Beispiel 3

### Herstellung von 2-Aminoethyl (1,2)-β-cyclodextrin

- Ansatz:: 2 g (1,5 mmol) β-Cyclodextrin (Wassergehalt 13%)
0,10 g (2,5 mmol) Natriumhydroxid
4,8 g (55 mmol) 2-Oxazolidinon

### Apparatur: Reaktionskolben mit Destillationsaufsatz

Durchführung: β-CD, Natriumhydroxid und 2-Oxazolidinon wurden vermischt und 8h auf 150°C erwärmt. Das Reaktionsgemisch wurde in wenig Wasser (ca. 5 ml) gelöst und in Aceton (ca. 50 ml) eingetropft. Der Niederschlag wurde abzentrifugiert und getrocknet. Ausbeute 1,9 g an 2-Aminoethyl (1,2)-β-cyclodextrin.

### Beispiel 4

### Herstellung von 2-Methylaminoethyl (0,1)-α-cyclodextrin

- Ansatz:: 1 g (0,85 mmol) α-Cyclodextrin (Wassergehalt 10.6%)
70 mg (0,5 mmol) Kaliumcarbonat
2,83 g (28 mmol) 3-Methyl-2-oxazolidinon

### Apparatur: Reaktionskolben mit Destillationsaufsatz

Durchführung: Das α-CD und 25% der Kaliumcarbonatmenge wurden mit 3-Methyl-2-oxazolidinon vermischt und auf 125°C erwärmt. Mit Ausnahme des Kaliumcarbonats war alles vollständig gelöst. Die Restmengen Kaliumcarbonat wurden im 2 h-Rhythmus in 25%-Portionen zugegeben. Nach insgesamt 8 h bei 125°C (leichtes Vakuum: ca. 200 mm Hg) wurde nicht umgesetztes 3-Methyl-2-oxazolidinon im Hochvakuum abdestilliert. Der Rückstand wurde in wenig Wasser (ca. 15 ml) gelöst und in Aceton (ca. 150 ml) eingetropft. Der Niederschlag wurde abzentrifugiert und getrocknet. Ausbeute 1,0 g an 2-Methylaminoethyl (0,1)-α-cyclodextrin.

### Beispiel 5

### 2-Methylaminoethyl(0,1)-hydroxypropyl(0,4)-β-cyclodextrin im Eintopfverfahren

- Ansatz:: 3 g (2,3 mmol) β-Cyclodextrin (Wassergehalt 13%)
5,8g = 7 ml (0,1 mol) Propylenoxid
0,24 g (1,7 mmol) Kaliumcarbonat
13 g (129 mmol) 3-Methyl-2-oxazolidinon

### Apparatur: Reaktionskolben mit Destillationsaufsatz

Durchführung: β-CD, Kaliumcarbonat und Propylenoxid wurden vermischt und 5 h unter Rückfluß gekocht. Anschließend wurde 3-Methyl-2-oxazolidinon zugegeben und langsam (2h) auf 130°C erwärmt, wobei überschüssiges Propylenoxid abdestilliert.

Danach wurde leichtes Vakuum (200 mm Hg) angelegt und noch 6 h bei 130°C gerührt. Am Ende der Umsetzung wurde überschüssiges 3-Methyl-2-oxazolidinon bei 1 mm Hg abdestilliert, in Wasser aufgenommen, dialysiert und gefriergetrocknet. Ausbeute 2,6 g an 2-Methylaminoethyl(0,1)-hydroxypropyl(0,4)-β-cyclodextrin.

### Beispiel 6

### 2-Methylaminoethyl(0,15)-hydroxypropyl(1,0)-β-cyclodextrin im Eintopfverfahren

- Ansatz:: 2,48 g (1,9 mmol) β-Cyclodextrin (Wassergehalt 13%)
1,08 g = 1,3 ml (18,6 mmol) Propylenoxid
0,22 g (5,5 mmol) Natriumhydroxid
2,34 g Wasser
5 g (49,5 mmol) 3-Methyl-2-oxazolidinon

### Apparatur: Reaktionskolben mit Destillationsaufsatz

Durchführung: β-CD, Natriumhydroxid, Wasser und Propylenoxid wurden vermischt und 5 h bei ca. 7°C und 17 h bei 20°C gerührt. Anschließend wurde 3-Methyl-2-oxazolidinon zugegeben und langsam (2h) auf 125°C erwärmt. Dabei wurde ein leichtes Vakuum (etwa 200 mm Hg) angelegt. Überschüssiges Propylenoxid und Wasser destillieren ab. Danach wurde noch 8 h bei 130°C gerührt. Am Ende der Umsetzung wurde überschüssiges 3-Methyl-2-oxazolidinon bei 1 mm Hg abdestilliert. Das Reaktionsgemisch wurde in Wasser aufgenommen, dialysiert und gefriergetrocknet. Ausbeute 2,1 g an 2-Methylaminoethyl(0,15)-hydroxy-propyl(1,0)-β-cyclodextrin.

## Patentansprüche

1. Verfahren zur Herstellung von Cyclodextrin-Derivaten mit mindestens einer über einen Spacer an das CD angeknüpften Aminofunktion, welches dadurch gekennzeichnet ist, daß α-, β-, γ-Cyclodextrin oder deren teilsubstituierte Derivate einzeln oder in beliebiger Mischung mit mindestens einem cyclischen Carbamidsäureester umgesetzt wird.

2. Verfahren gemäß Anspruch 1, dadurch gekennzeichnet, daß die Umsetzung in Gegenwart eines Katalysators erfolgt.

3. Verfahren gemäß Anspruch 2, dadurch gekennzeichnet, daß als Katalysator mindestens eine Base oder mindestens ein basischer Ionenaustauscher eingesetzt wird.

4. Verfahren gemäß einem oder mehreren der Ansprüche 1 bis 3, dadurch gekennzeichnet, daß als cyclischer Carbamidsäureester 2-Oxazolidinon, 3-Methyl-2-oxazolidinon, 3-Ethyl-2-oxazolidinon, 2-Oxazolidinon, 3-Methyl-2-oxazolidinon, 3-(2-Hydroxyethyl)-2-oxazolidinon, 3-(2-Hydroxypropyl)-2-oxazolidinon, Ethyl-2-oxazolidinon, 3-Propyl-2-oxazolidinon, 3-Propionyl-2-oxazolidinon, 4-Ethyl-2-oxazolidinon, 3-(2-Hydroxyethyl)-2-oxazolidinon, 4-tert.-Butyl-2-oxazolidinon, 3-Phenyl-2-oxazolidinon,4-Phenyl-2-oxazolidinon, 3-Acetyl-2-oxazolidinon, 3-(2-Hydroxypropyl)-5-methyl-2-oxazolidinon, 3-(2-Hydroxypropyl)-5-methyl-2-oxazolidinon, 4-Isopropyl-2-oxazolidinon, 5-Methyl-2-oxazolidinon, 1-Oxa-2-azaspiro-[4,5]-decan-2-on, 2-Oxazinon, 2-Oxazepinon oder Mischungen der genannten Substanzen eingesetzt werden.

5. Verfahren gemäß einem oder mehreren der Ansprüche 2 bis 4, dadurch gekennzeichnet, daß Cyclodextrin und Carbamidsäureester im Molverhältnis 1:0,2 bis 1:20 und Cyclodextrin und wasserfreier Katalysator im Molverhältnis 1:0,01 bis 1:10 eingesetzt werden.

6. Verfahren gemäß einem oder mehreren der Ansprüche 1 bis 5, dadurch gekennzeichnet, daß die Reaktion bei einer Temperatur von 60 bis 170°c über einen Zeitraum von 2 bis 10 Stunden erfolgt.

## Claims

1. Process for preparing cyclodextrin derivatives having at least one amino function which is linked to the CD via a spacer, which is characterized in that α-cyclo-dextrin, β-cyclodextrin or γ-cyclodextrin, or their partially substituted derivatives, is/are reacted individually or in arbitrary mixture with at least one cyclic carbamic ester.

2. Process according to Claim 1, characterized in that the reaction is effected in the presence of a catalyst.

3. Process according to Claim 2, characterized in that at least one base or at least one basic ion exchanger is employed as the catalyst.

4. Process according to one or more of Claims 1 to 3, characterized in that 2-oxazolidinone, 3-methyl-2-oxazolidinone, 3-ethyl-2-oxazolidinone, 3-propyl-2-oxazolidinone, 3-butyl-2-oxazolidinone, 3-(2-hydroxy-ethyl)-2-oxazolidinone, 3-(2-hydroxypropyl)-2-oxazolidinone, 3-phenyl-2-oxazolidinone, 3-acetyl-2-oxazolidinone, 3-propionyl-2-oxazolidinone, 4-ethyl-2-oxazolidinone, 4-isopropyl-2-oxazolidinone, 4-tert-butyl-2-oxazolidinone, 4-benzyl-2-oxazolidinone, 4-phenyl-2-oxazolidinone, 5-methyl-2-oxazolidinone, 3-(2-hydroxypropyl)-5-methyl-2-oxazolidinone, 3-(2-hydroxypropyl)-5-methyl-2-oxazolidinone, 4-methyl-5-propyl-2-oxazolidinone, 4-methyl-5-phenyl-2-oxazolidinone, 1-oxa-2-azaspiro[4.5]-decan-2-one, 2-oxazinone or 2-oxazepinone, or mixtures of the said substances, are employed as cyclic carbamic ester.

5. Process according to one or more of Claims 2 to 4, characterized in that cyclodextrin and carbamic ester are employed in a molar ratio of from 1:0.2 to 1.20, and cyclodextrin and anhydrous catalyst are employed in a molar ratio of from 1:0.01 to 1:10.

6. Process according to one or more of Claims 1 to 5, characterized in that the reaction is effected at a temperature of from 60 to 170°C over a period of from 2 to 10 hours.

## Revendications

1. Procédé de préparation de dérivés de cyclodextrine ayant au moins une fonction amino liée à la CD par un groupe espaceur, lequel est caractérisé en ce que l'α-, la β-, la γ-cyclodextrine ou leurs dérivés en partie substitués, sont mis à réagir individuellement ou en mélange quelconque avec au moins un ester carbamique cyclique.

2. Procédé selon la revendication 1, caractérisé en ce que la réaction est réalisée en présence d'un catalyseur.

3. Procédé selon la revendication 2, caractérisé en ce qu'on utilise en tant que catalyseur au moins une base ou au moins un échangeur d'ions basique.

4. Procédé selon l'une ou plusieurs des revendications 1 à 3, caractérisé en ce qu'on utilise en tant qu'ester carbamique cyclique la 2-oxazolidinone, la 3-méthyl-2-oxazolidinone, la 3-éthyl-2-oxazolidinone, la 3-propyl-2-oxazolidinone, la 3-butyl-2-oxazolidinone, la 3-(2-hydroxyéthyl)-2-oxazolidinone, la 3-(2-hydroxy-propyl)-2-oxazolidinone, la 3-phényl-2-oxazolidinone, la 3-acétyl-2-oxazolidinone, la 3-propionyl-2-oxazolidinone, la 4-éthyl-2-oxazolidinone, la 4-isopropyl-2-oxazolidinone, la 4-tert-butyl-2-oxazolidinone, la 4-benzyl-2-oxazolidinone, la 4-phényl-2-oxazolidinone, la 5-méthyl-2-oxazolidinone, la 3- (2-hydroxypropyl)-5-méthyl-2-oxazolidinone, la 3- (2-hydroxypropyl)-5-méthyl-2-oxazolidinone, la 4-méthyl-5-propyl-2-oxazolidinone, la 4-méthyl-5-phenyl-2-oxazolidinone, la 1-axa-2-azaspiro[4,5]décan-2-one, la 2-oxazinone, la 2-oxazépinone, ou des mélanges desdites substances.

5. Procédé selon l'une ou plusieurs des revendications 2 à 4, caractérisé en ce qu'on utilise la cyclodextrine et l'ester carbamique dans un rapport molaire de 1:0,2 à 1:20, et la cyclodextrine et le catalyseur anhydre dans un rapport molaire de 1:0,01 à 1:10.

6. Procédé selon l'une ou plusieurs des revendications 1 à 5, caractérisé en ce que la réaction est réalisée à une température de 60 à 170°C sur une période de 2 à 10 heures.
